# EUROPÄISCHE PATENTSCHRIFT

(11) **EP 0 737 688 B1**
(45) Veröffentlichungstag und Bekanntmachung des Hinweises auf die Patenterteilung: **28.07.1999**
(21) Anmeldenummer: 96105881.5
(22) Anmeldetag: 15.04.1996
(51) Int. Cl.: C07F 7/18, C07F 7/12

(54) **Silane mit verzweigten Alkylketten**
Silanes with branched alkyl chains
Silane avec une chaîne d'alkyle ramifiée

(30) Priorität: 15.04.1995 DE 19514258
(43) Veröffentlichungstag der Anmeldung: 16.10.1996
(73) Patentinhaber: BASF AKTIENGESELLSCHAFT, 67056 Ludwigshafen (DE)
(72) Erfinder: Friedrich, Holger, Dr., 67098 Bad Dürkheim (DE); Keller, Harald, Dr., 67069 Ludwigshafen (DE); Leutner, Bernd, Dr., 67227 Frankenthal (DE)
(74) Vertreter: Isenbruck, Günter, Dr.

(56) Entgegenhaltungen:
- EP-A- 0 535 691

## Beschreibung

Die vorliegende Erfindung betrifft neue Silane der allgemeinen Formel I 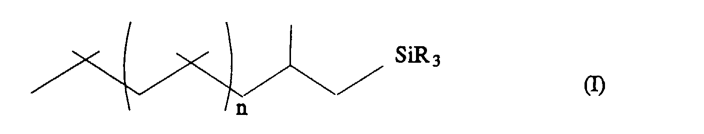 in der n eine ganze Zahl von 1 bis 5 ist, mindestens einer der Reste R für einen hydrolysierbaren Rest aus der Gruppe der Substituenten Halogen, Alkoxy, sek. Amino und Oxycarbonylwasserstoff oder Oxycarbonylalkyl steht und die anderen Reste für Alkyl, Cycloalkyl, Aryl oder einen der genannten hydrolysierbaren Reste stehen.

Weiterhin betrifft die Erfindung ein Verfahren zur Herstellung der Silane der Formel I sowie die Verwendung von Silanen der allgemeinen Formel Ia, 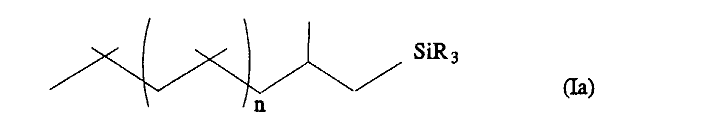 in der n eine ganze Zahl von 0 bis 5 ist, mindestens einer der Reste R für einen hydrolysierbaren Rest aus der Gruppe der Substituenten Halogen, Alkoxy, sek. Amino und Oxycarbonylwasserstoff oder Oxycarbonylalkyl steht und die anderen Reste für Alkyl, Cycloalkyl, Aryl oder einen der genannten hydrolysierbaren Reste stehen, zur Hydrophobierung poröser mineralischer Substrate, zur Herstellung von chromatographischen Phasen, zur Beschichtung anorganischer Pigmente, zur Erzeugung von Isolatorfilmen auf elektronischen Bauteilen auf Siliciumbasis, zur Beschichtung von Gläsern oder als Stereomodifier bei der Polymerisation von α-Olefinen.

Silane mit langen n-Alkylketten und mindestens einem hydrolysierbaren Rest am Siliciumatom finden Verwendung zur Hydrophobierung von Glas (EP-A 535 691) oder anderen anorganischen Substraten (EP-A 273 867).

In der DE-OS 28 51 456 wird ein Verfahren zur Herstellung von Organosiliciumverbindungen unter Verwendung eines dort näher definierten Rohrreaktors beschrieben, das dadurch gekennzeichnet ist, daß der Reaktorinhalt mit einer Geschwindigkeit von mindestens 1000 cm/min im Umlauf geführt wird. Beispielhaft wird dort die Umsetzung von Trichlorsilan und Diisobutylen beschrieben, die zu 2,4,4-Trimethylpentyltrichlorsilan führt.

Die EP-A 252 372 lehrt die Herstellung von Siliciumgruppen tragenden Polyisobutenen mit einem Molekulargewicht von 500 bis 30000. Die so erhaltenen Silane weisen die Molgewichtsverteilung der als Ausgangsverbindung verwendeten Polymere auf. Solche chemisch uneinheitlichen Produkte sind jedoch für technische Anwendungen häufig unerwünscht. So sind z.B. für die Erzeugung von Monolagen auf anorganischen Substraten nur bestimmte Silane mit definierter Alkylkette geeignet, um qualitativ hochwertige Schichten zu erzeugen. Für andere Anwendungen, z.B. im Bautenschutzsektor, würde es sich nachteilig bemerkbar machen, daß die in den funktionalisierten Polyisobutenen enthaltenen hochmolekularen Fraktionen wesentlich langsamer reagieren als niedermolekulare Fraktionen. Außerdem wird bei der Addition an Polyisobuten erfahrungsgemäß keine vollständige Umsetzung erzielt, was dazu führt, daß nicht funktionalisiertes Polyisobuten im Produkt enthalten ist. Dies ist unerwünscht, da mögliche Anwendungen der silylierten Polyisobutene auf der weiteren Umsetzung der Silylgruppen beruhen. Die im Produkt enthaltenen Ausgangsverbindungen können sich dann störend auswirken, da sie nicht reagieren.

Das oben gesagte trifft auch auf die in der WO 93/24539 beschriebenen mit einem Silylierungsmittel umgesetzten Polyolefine zu.

Es bestand somit die Aufgabe, chemisch einheitliche Silane mit langen, verzweigten Alkylketten zur Verfügung zu stellen.

Demgemäß wurden die eingangs definierten Silane I und ein Verfahren zu ihrer Herstellung gefunden. Ferner betrifft die vorliegende Erfindung die Verwendung von Silanen der Formel Ia, wie oben definiert, in verschiedenen technischen Gebieten, insbesondere zur Beschichtung anorganischer Substrate und bei der Polymerisation von α-Olefinen.

Die erfindungsgemäßen Silane I tragen neben einem verzweigten Alkylrest Substituenten R, von denen mindestens einer hydrolysierbar ist. Unter hydrolysierbaren Resten sind solche Reste zu verstehen, die in Gegenwart von Wasser unter Spaltung der Bindung zwischen dem Siliciumatom und dem hydrolysierbaren Rest reagieren, wobei ein Silanol entsteht, welches weiter reagieren kann, beispielsweise unter Ausbildung eines Siloxans.

Als hydrolysierbare Reste R kommen in Betracht:
- Halogen wie Fluor, Chlor und Brom, vorzugsweise Chlor und Brom und besonders bevorzugt Chlor,
- Alkoxy, wobei die Reste geradkettig oder verzweigt sein können, vorzugsweise C₁-C₁₂-Alkoxy, besonders bevorzugt C₁-C₄-Alkoxy wie Methoxy, Ethoxy, n-Propoxy und n-Butoxy,
- sekundäre Aminoreste wie Dialkylamino, Arylalkylamino wie Methylphenylamino und Diarylamino wie Diphenylamino, bevorzugt Di(C₁-C₆-alkyl)amino wie Dimethylamino, Diethylamino und Dibutylamino,
- Oxycarbonylwasserstoff sowie Oxycarbonylalkyl, vorzugsweise C₂-C₈-Oxycarbonylalkyl wie Oxyacetyl und Oxypropionyl.

Die weiteren Reste R können ebenfalls für einen hydrolysierbaren Rest stehen. Weiterhin kommen aber auch folgende, unter Hydrolysebedingungen stabile Substituenten in Betracht:
- Alkyl, wobei die Reste geradkettig oder verzweigt oder cyclisch sein können, vorzugsweise C₁-C₁₂-Alkyl, besonders bevorzugt C₁-C₆-Alkyl wie Methyl, Ethyl, n-Propyl, iso-Propyl, n-Butyl, sec. sec.-Butyl, tert.-Butyl, n-Hexyl, Cyclopentyl und Cyclohexyl,
- Aryl, bevorzugt C₆-C₁₀-Aryl, besonders bevorzugt Phenyl, wobei der Arylrest jeweils einen oder mehrere inerte Substituenten wie Halogen oder Alkoxy tragen kann.

Besonders hervorzuheben sind folgende Reste SiR₃: Trichlorsilyl, Chlordimethoxysilyl, Dichlormethoxysilyl, Trimethoxysilyl, Dichlormethylsilyl, Dimethoxymethylsilyl, Diethoxymethylsilyl, Triethoxysilyl, Dimethoxycyclopentylsilyl, tert.-Butyldimethoxysilyl und Dimethoxyisopropylsilyl.

Besonders bevorzugt sind die folgenden Silane:
Trichlor(2,4,4,6,6-pentamethylheptyl)silan,
Dichlormethyl(2,4,4,6,6-pentamethylheptyl)silan,
Chlordimethyl(2,4,4,6,6-pentamethylheptyl)silan,
tert.-Butyldimethoxy(2,4,4,6,6-pentamethylheptyl)silan,
Dimethoxymethyl(2,4,4,6,6-pentamethylheptyl)silan,
Dimethoxy(2,4,4,6,6-pentamethylheptyl)iso-propylsilan,
Trichlor(2,4,4,6,6,8,8-heptamethylnonyl)silan,
Chlor(2,4,4,6,6,8,8-heptamethylnonyl)dimethoxysilan,
Dichlor(2,4,4,6,6,8,8-heptamethylnonyl)methoxysilan,
(2,4,4,6,6,8,8-heptamethylnonyl)trimethoxysilan,
Dichlor(2,4,4,6,6,8,8-heptamethylnonyl)methylsilan,
Trichlor(2,4,4,6,6,8,8,10,10-nonamethylundecyl)silan,
Trimethoxy(2,4,4,6,6,8,8,10,10-nonamethylundecyl)silan, oder
Dimethoxy(2,4,4,6,6-pentamethylheptyl)cyclopentylsilan.

Der verzweigte Alkylrest der Silane I leitet sich von einem iso-Butenoligomer ab. Solche Oligomere der Formel II dienen als Ausgangsverbindungen für die erfindungsgemäße Herstellung der Silane I 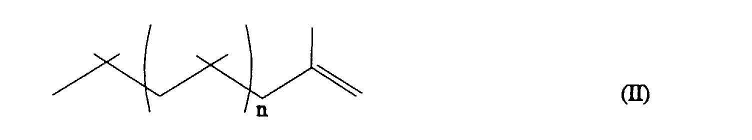 Iso-Butenoligomere II, in denen n für eine ganze Zahl zwischen 1 und 5 steht, fallen bei der technischen Polymerisation von iso-Buten zu Polyisobuten (C.E. Schildknecht, Vinyl and Related Polymers, New York 1952, S. 534-571) an und können destillativ von den Polymeren getrennt werden. Sie können fraktioniert destilliert werden, wobei Gemische mit mehr als 90 Gew.-%, vorzugsweise mehr als 95 Gew.-% Isomeren der gleichen Kohlenstoffzahl erhalten werden. Im Gemisch enthaltene iso-Butenoligomere mit innenliegenden Doppelbindungen reagieren während der Hydrosilylierung teilweise ebenso wie die Oligomere II zu den gewünschten Verfahrensprodukten I. Bevorzugt werden iso-Butenoligomere umgesetzt, in denen n für 1, 2 oder 3 steht.

Zur Herstellung aller Silane I wird zunächst ein iso-Butenoligomer II mit einem eine SiH-Gruppe tragenden Silan unter Addition an die Doppelbindung umgesetzt, in der Regel in Form eines Isomerengemisches, das das gesuchte Isomer als Hauptkomponente enthält. Gegebenenfalls wird das so erhaltene Silan I zur Einführung bestimmter Substituenten am Siliciumatom weiter umgesetzt.

Das iso-Butenoligomer II wird mit einem Silan umgesetzt, das als weitere Substituenten neben dem Wasserstoffatom Chlor-, Brom-, Alkyl- und/oder Arylreste trägt. Alle weiteren oben hydrolysierbaren Substituenten werden bevorzugt in Folgereaktionen eingeführt. Bevorzugte Silane sind Trichlorsilan, Methyldichlorsilan und Dimethylchlorsilan.

Hydrosilylierungen sind aus Comprehensive Handbook on Hydrosilylation, B. Marciniec, Ed. Oxford-New York bekannt. Dazu wird ein iso-Butenoligomer II in der Regel mit einer äquimolaren Menge oder einem Überschuß eines eine SiH-Gruppe tragenden Silans umgesetzt.

Die Umsetzung erfolgt in Gegenwart an sich bekannter Hydrosilylierungs katalysatoren. Als solche Katalysatoren kommen Verbindungen wie Platin-, Rhodium- oder Rutheniumverbindungen in Betracht, vorzugsweise Platinverbindungen, insbesondere Hexachloroplatinsäure und Divinylsiloxan-Platin-O-Komplex. Diese Katalysatoren können in Mengen von 10⁻² bis 10⁻⁶ Mol auf 1 kg Isomerengemisch verwendet werden.

Die Reaktionstemperatur beträgt in der Regel 80 bis 160 °C. Üblicherweise wird die Umsetzung bei Normaldruck vorgenommen, sie kann aber auch bei Unterdruck oder - bei Verwendung leichtflüchtiger Silane - bei Überdruck bis zu 10 bar vorgenommen werden. Das Verfahren kann kontinuierlich und diskontinuierlich ausgeübt werden.

Die Ausgangsverbindungen, der Katalysator sowie gegebenenfalls ein Lösungsmittel wie Toluol, Xylol oder Testbenzin werden vermischt und im allgemeinen für 2 bis 24 h auf die Reaktionstemperatur erhitzt. Will man bei Einsatz niedrig siedender Silane nicht unter Druck arbeiten, kann das Silan zu den übrigen Komponenten, die auf Reaktionstemperatur gebracht wurden, zugegeben werden. Die Aufarbeitung des Reaktionsgemisches erfolgt nach an sich bekannten Methoden, bevorzugt destillativ.

Weitere Substituenten können nach an sich bekannten Methoden durch Substitution von Chlor- oder Bromsubstituenten in den oben beschriebenen Hydrosilylierungsprodukten eingefügt werden:
- eine Umsetzung mit Fluorwasserstoff oder Antimontrifluorid führt zu fluorhaltigen Silanen I (W. Noll, Chemie und Technologie der Silicone, VCH Weinheim 1960, S. 59),
- eine Umsetzung mit Alkoholen, Trialkylorthoformiaten oder Alkalimetallalkoholaten führt zu alkoxysubstituierten Silanen I (Methoden der Organischen Chemie, Houben-Weyl, Bd. XIII/5, Organosiliciumverbindungen, Stuttgart 1980),
- eine Umsetzung mit Carbonsäuren oder Carbonsäureanhydriden führt zu oxycarbonylsubstituierten Silanen I (s. Houben-Weyl, loc.cit.),
- eine Umsetzung mit sekundären Aminen oder deren Alkalimetallamiden führt zu aminosubstituierten Silanen I (s. Houben-Weyl, loc.cit.), und
- eine Umsetzung mit Alkyl- oder Cycloalkylmagnesiumhalogeniden oder mit Lithium- oder Natrium-Alkanen oder Lithium- oder Natrium-Cycloalkanen führt zu Silanen der allgemeinen Formel I mit 1 oder 2 Alkyl- oder Cycloalkylgruppen anstelle der vorher vorhanden Chlor- oder Bromreste.
Bevorzugt werden als Alkyl- oder Cycloalkylverbindungen der oben beschriebenen Art C₂-C₆-Alkyl- oder C₅-C₆-Cycloalkylverbindungen eingesetzt. Weiter bevorzugt werden Ethyl-, n-Propyl-, iso-Propyl-, n-Butyl-, sec.-Butyl-, n-Hexyl-, Cyclopentyl- oder Cyclohexylverbindungen eingesetzt.

Selbstverständlich können die oben beschriebenen Hydrosilylierungsprodukte mehreren der genannten Folgereaktionen unterworfen werden.

Das erfindungsgemäße Verfahren erlaubt die Herstellung der Silane I in hohen Ausbeuten.

Die Silane der Formel Ia, wie oben definiert, finden aufgrund ihrer durch Hydrolyse zu reaktiven Silanolgruppen umsetzbaren Reste überwiegend in solchen technischen Gebieten Verwendung, in denen eine besonders hohe Haftung der Silane an ein Substrat gefordert ist. Vorzugsweise werden dabei die erfindungsgemäßen Silane der Formel I eingesetzt, da sie hervorragende haftungsverbessernde Eigenschaften aufweisen. Weiter bevorzugt werden die folgenden Silane eingesetzt:
Trichlor(2,4,4,6,6-pentamethylheptyl)silan
Dichlormethyl(2,4,4,6,6-pentamethylheptyl)silan,
Dimethoxymethyl(2,4,4,6,6-pentamethylheptyl)silan,
Dimethoxy(2,4,4,6,6-pentamethylheptyl)iso-propylsilan,
Chlordimethyl(2,4,4,6,6-pentamethylheptyl)silan,
tert.-Butyldimethoxy(2,4,4,6,6-pentamethylheptyl)silan,
Dimethoxy(2,4,4,6,6-pentamethyl(heptyl)cyclopentylsilan,
Trichlor(2,4,4,6,6,8,8-heptamethylnonyl)silan,
Chlor(2,4,4,6,6,8,8-heptamethylnonyl)dimethoxysilan,
Dichlor(2,4,4,6,6,8,8-heptamethylnonyl)methoxysilan,
(2,4,4,6,6,8,8-Heptamethylnonyl)trimethoxysilan,
Dichlor(2,4,4,6,6,8,8-heptamethylnonyl)methylsilan,
Trichlor(2,4,4,6,6,8,8,10,10-nonamethylundecyl)silan, oder
Trimethoxy(2,4,4,6,6,8,8,10,10-nonamethylundecyl)silan.

Diese Silane finden Verwendung zur Herstellung von Mitteln, die die hydrophoben Eigenschaften von anorganischen Materialien verbessern. Insbesondere können die Silane in Kombination mit anderen Silanen zur Imprägnierung und Hydrophobierung von porösen mineralischen Substraten wie Natursteinen, Mauerwerk, Beton oder Fassadenaußenputz eingesetzt werden, wobei sie der Erhöhung des Abperleffektes dienen und das Eindringen von Wasser und korrosionsbeschleunigenden Salzen verhindern.

Durch den Einsatz derartiger Silane können die hydrophoben Eigenschaften der Mittel deutlich verbessert und die Beständigkeit der Schutzschichten erhöht werden.

Die Herstellung solcher hydrophobierenden Mittel erfolgt durch Vermischen eines oder mehrerer dieser Silane, bevorzugt der Trialkoxysilane, mit Alkyltrialkoxysilanen, die 1 bis 6 Kohlenstoffatome in der Alkylkette tragen, sowie gegebenenfalls eines Lösungsmittels wie Testbenzin oder ein C₂-C₆-Alkohol.

Gewöhnlich genügt es, nur einen geringen Anteil (1 bis 10 Gew.-%) der Silane zu diesen Mischungen zu geben, um die volle hydrophobierende Wirkung zu erzielen. Diesen Mischungen oder Lösungen können weiterhin Kondensationskatalysatoren wie Dibutylzinndilaurat oder Titanorthobutylat zugefügt werden, die zur Verbesserung der Anwendungseigenschaften solcher Hydrophobiermittel beitragen, da sie das Abreagieren der Silane an mineralischen Oberflächen beschleunigen. Auch ist es möglich, durch Einrühren von Wasser ein Cohydrolysat herzustellen, welches ähnliche Eigenschaften wie die wasserfreie Mischung oder Lösung aufweist.

Weiterhin finden die hier in Rede stehenden Silane zur Herstellung von chromatographischen Phasen mit verbesserten Trenneigenschaften Anwendung.

Allgemeine Verfahren und Methoden zur Herstellung solcher Phasen werden in: Journal of Chromatography Library, Vol. 16: Porous Silica, Its Properties and Use as Support in Column Liquid Chromatography, Unger, Klaus K., Elsevier, Amsterdam 1979 erläutert und können analog angewendet werden.

Zur Herstellung solcher Phasen wird beispielsweise Kieselgel in Toluol suspendiert und unter Rühren zum Sieden gebracht. Zu der Suspension wird Triethylamin und eine der erfindungsgemäßen Verbindungen, insbesondere die Trichlorsilane und Trialkoxysilane gegeben.

Die Silane finden Anwendung zur Beschichtung von anorganischen, insbesondere silikatischen, Pigmenten und Füllstoffen. So kann die Stabilität der Pigmente gegenüber Atmosphärilien erhöht und ihre Oberflächeneigenschaften, z.B. ihre Hydrophobie oder ihr Glanz, verbessert werden. Außerdem kann die Verträglichkeit der Pigmente mit stark unpolaren Medien verbessert werden, was dazu führt, daß sich die Pigmente in unpolaren organischen Medien besser dispergieren lassen. Besonders eignen sich die erfindungsgemäßen Silane dazu, Füllstoffe mit z.B. Elastomeren verträglich zu machen und in diese einzuarbeiten. Verfahren zur Beschichtung von Pigmenten sind bekannt, z.B. aus G. Witucki, J. Coat. Technol. 65 (1993) 822, 57 oder E.P. Plueddemann, Silane Coupling Agents, Plenum Press, New York 1982.

Die Silane können für die Erzeugung von dünnen Isolatorfilmen auf elektronischen Bauteilen eingesetzt werden. Dazu werden auf Siliciumsubstraten bzw. -bauteilen monomolekulare Schichten erzeugt. Bei diesen monomolekularen Schichten handelt es sich um selbsterzeugende (self assembly) Monolagen, die ihre Stabilität dadurch erhalten, daß die erfindungsgemäßen Verbindungen mit den Silanolgruppen der Siliciumoxidschicht, die sich auf dem Silicium befindet, reagieren und kovalente Bindungen ausbilden.

Die Erzeugung solcher Schichten kann auf unterschiedliche Weise erfolgen. Am besten eignen sich Tauchverfahren, oder die Substanzen werden durch Aufsprühen auf das Substrat aufgebracht. Üblicherweise löst man 0,5 bis 2 g einer oder mehrerer der erfindungsgemäßen Verbindungen, wobei Verbindungen mit einem Trichlorsilylrest bevorzugt eingesetzt werden, in 100 g eines organischen Lösungsmittels wie Ethanol, und taucht das zu beschichtende Teil mehrere Minuten in die Lösung ein. Nach dem Herausnehmen aus dem Beschichtungsbad wird das Bauteil mit dem Lösungsmittel gespült und getrocknet. Gegebenenfalls können zum Trocknen erhöhte Temperaturen angewendet werden. Setzt man für die Beschichtung Silane I mit Trialkoxysilylgruppen ein, empfiehlt es sich, zu der Lösung mehrere Stunden vor dem Beschichtungsprozeß etwas Wasser (z.B. 5 bis 10 g) zuzusetzen und zusätzlich die Lösung mit einer Säure, vorzugsweise Essigsäure, auf einen pH-Wert von 4,5 bis 5,5, zu bringen. Auf diese Weise werden die Alkoxygruppen hydrolysiert und es entstehen Silanolgruppen, die ihrerseits mit der Oberfläche des Substrats reagieren können.

Die Silane finden Anwendung als hydrophobierendes Beschichtungsmittel von Glas, Glas mit Antireflexionsschichten, sowie von SiO₂- oder MgF₂-beschichteten Kunststoffgläsern.

Schließlich können die Silane als Stereomodifier bei der Polymerisation von α-Olefinen eingesetzt werden. Dabei bedient man sich auch hier vorzugsweise der erfindungsgemäßen Silane der allgemeinen Formel 1, weiter bevorzugt der Silane der Formel I, die als Reste R zwei Methoxygruppen und eine C₁-C₆-Alkyl- oder eine C₅-C₆-Cycloalkylgruppe aufweisen. Insbesondere bevorzugt werden Silane der Formel I verwendet, bei denen zwei der Reste R für Methoxy und einer der Reste R für Methyl, iso-Propyl, sec.-Butyl, tert.-Butyl, Cyclopentyl oder Cyclohexyl steht.

Als Edukte bei der Polymerisation werden vorzugsweise C₂-C₁₀-α-Olefine, wie zum Beispiel Ethylen, Propylen, 1-Buten, 1-Penten, 1-Hexen, weiter bevorzugt Ethylen, Propylen oder 1-Buten, insbesondere bevorzugt Propylen eingesetzt.

Die obigen Silane werden als Stereomodifier zusammen mit Katalysatorsystemen vom Typ der Ziegler-Natta-Katalysatoren, die beispielsweise aus der EP-B 14 523, EP-A 23 425, EP-A 45 975, EP-A 195 497, EP-A 250 229, DE-A-19 609 952 und der US 4 857 613 bekannt sind, eingesetzt. Diese Katalysatorsysteme werden insbesondere zur Polymerisation von α-Olefinen verwendet und enthalten u.a. Verbindungen des mehrwertigen Titans, Aluminiumhalogenide und/oder -alkyle, sowie Elektronendonorverbindungen, beispielsweise Siliciumverbindungen, Ether, Carbonsäureester, Ketone und Lactone, die einerseits in Verbindung mit der Titanverbindung und andererseits als Cokatalysator verwendet werden.

### Beispiele

### Beispiel 1

### Herstellung von Trichlor(2,4,4,6,6,8,8-heptamethylnonyl)silan

100 g einer Fraktion aus Nebenprodukten der Polyisobutensynthese, worin zu ca. 98 Gew.-% Verbindungen mit 16 C-Atomen enthalten waren, wurden vorgelegt, mit 0,1 ml einer 0,1 M H₂PtCl₆·6H₂O-Lösung in Isopropanol versetzt und auf 120 °C erwärmt. Zu dem erwärmten Olefin wurde langsam Trichlorsilan (insgesamt 60 g, 0,44 mol) zudosiert und die Temperatur 16 h auf 120 °C gehalten. Anschließend wurde das Produkt destilliert.
Ausbeute: 96 g
NMR-Daten
¹³C-NMR, δ (ppm) = 25,1, 25,4 (2C), 29,5, 29,7, 30,85, 30,90 (4C), 32,7 (3C), 32,8 (1C), 35,7 (1C), 36,5 (1C), 37,8 (1C), 56,0 (1C), 56,4 (1C), 58,3 (1C)
²⁹Si-NMR, δ (ppm) = 11,8
Kp = 117 °C/0,3 mbar
Elementanalytik:
C 53,9 % (ber. 53,4), H 9,0 % (ber. 9,24), Cl 29,42 % (ber. 29,55).

### Beispiel 2

### Herstellung von Chlor(2,4,4,6,6,8,8-heptamethylnonyl)dimethoxysilan

Ein Rohprodukt aus der Umsetzung von 79 g Oligomerfraktion mit Trichlorsilan (52 g, 0,38 mol) gemäß Beispiel 1, wobei jedoch die Reaktionsdauer nur 4 h betrug, wurde von überschüssigem Trichlorsilan befreit, mit 122 g (1,15 mol) Trimethylorthoformiat gemischt und 8 h am Rückfluß erhitzt. Das Reaktionsgemisch wurde destilliert. Als Produkt wurden 31 g Dichlor(2,4,4,6,6,8,8-heptamethylnonyl)methoxysilan A mit einem Anteil von 21 % Chlor(2,4,4,6,6,8,8-heptamethylnonyl)dimethoxysilan B erhalten.
Kp = 95 bis 115 °C/< 1 mbar
NMR-Daten
²⁹Si-NMR: δ (ppm) = -9,0 ppm (A); -26,6 (B)

### Beispiel 3

### Herstellung von (2,4,4,6,6,8,8-Heptamethylnonyl)trimethoxysilan

312 g einer 30 %igen Natriummethylatlösung in Methanol und 1 l Tetrahydrofuran (THF) wurden über 1 h mit 211,5 g (0,588 mol) Trichlor(2,4,4,6,6,8,8-heptamethylnonyl)silan, hergestellt gemäß Beispiel 1, versetzt. Das Reaktionsgemisch wurde 4 h nachgerührt. Nach Abtrennung ausgefallenen Natriumchlorids wurden THF und Methanol abdestilliert und das Produkt durch Destillation gereinigt.
Ausbeute: 181,9 g, 89 %
NMR-Daten
¹³C-NMR, δ (ppm) = 21,1 (1C), 24,9 (1C), 25,9 (1C), 26,9, 29,8, 30,9, 31,0 (4C), 32,8 (1C), 32,9 (1C), 36,5 (1C), 37,9, (1C), 50,7 (3C), 56,6 (1C), 56,9 (1C), 58,4 (1C)
²⁹Si-NMR, δ (ppm) = -42,1
Kp = 107 bis 110 °C/0,08 mbar
Elementaranalytik: C 65,9 % (ber. 65,83), H 11,6 % (ber. 12,21).

### Beispiel 4

### Herstellung von (2,4,4,6,6,8,8-Heptamethylnonyl)trimethoxysilan

33,5 g (0,093 mol) Trichlor(2,4,4,6,6,8,8-heptamethylnonyl)silan wurde bei 100 °C vorgelegt. Eine mit dem Reaktionsgefäß verbundene Waschflasche wurde mit wasserfreiem Methanol beschickt. Ein Argonstrom (10 l/h) wurde durch die Waschflasche in das Chlorsilan geleitet. Innerhalb von 6 h wurden 18,8 g (0,59 mol) Methanol in das Reaktionsgefäß überführt. Das Produkt wurde von leichtflüchtigen Bestandteilen befreit.
Ausbeute: 32,2 g, 100 %
²⁹Si-NMR, δ (ppm) = -42,1 ppm

Die direkte Hydrosilylierung des Ausgangssilans mit Trimethoxysilan in Gegenwart von H₂PtCl₆·6H₂O bei 110 °C über 10 h gelang nicht.

### Beispiel 5

### Herstellung von Trichlor(2,4,4,6,6,8,8,10,10-nonamethylundecyl)silan

100 g einer Fraktion aus Nebenprodukten der Polyisobutensynthese, worin zu mindestens 97 Gew.-% Verbindungen mit 20 C-Atomen enthalten waren, wurden mit 0,1 ml einer 0,1 M H₂PtCl₆·6H₂O-Lösung in Isopropanol versetzt und auf 120 °C erwärmt. Dazu wurde Trichlorsilan (insgesamt 60 g, 0,44 mol) zudosiert und die Temperatur 16 h auf 120 °C gehalten. Anschließend wurde im Vakuum destilliert.
Ausbeute: 59 g
NMR-Daten
¹³C-NMR, δ (ppm) = 25,02 (1C), 25,07 (1C), 29,2, 29,3, 30,7, 30,89, 30,93 (6C), 32,4 (3C), 35,3 (1C), 32,5, 36,2, 37,65, 37,72 (4C), 55,8, 56,7, 58,1, 58,5 (4C)
²⁹Si-NMR, δ (ppm) = 11,8
Kp = 158 °C/0,2 mbar, Gehalt (GC): 98,5 %
Elementaranalytik: C 58,7 % (ber. 57,74), H 9,7 % (ber.9,94), Cl 25,56 % (ber.25,57).

### Beispiel 6

### Herstellung von Dichlor(2,4,4,6,6,8,8-heptamethylnonyl)methylsilan

100 g einer Fraktion aus Nebenprodukten der Polyisobutensynthese, worin Verbindungen mit 16 C-Atomen zu mindestens 98 Gew.-% enthalten waren wurden mit 0,1 ml einer 0,1 M H₂PtCl·6H₂O-Lösung in Isopropanol versetzt und auf 120 °C erwärmt. Zu dem erwärmten Olefin wurde Dichlormethylsilan (insgesamt 50 g, 0,44 mol) zudosiert und die Temperatur 3 h auf 120 °C gehalten. Anschließend wurde im Vakuum destilliert.
Ausbeute: 104 g
²⁹Si-NMR-Daten, δ = 31,7 ppm
Kp = 114 °C/0,3 mbar, Gehalt (GC): 96 %
Elementaranalytik: C 60,1 % (ber. 60,15), H 10,4 % (ber. 10,69), Cl 20,5 % (ber. 20,89).

### Beispiel 7

### Herstellung von Trichlor(2,4,4,6,6-pentamethylheptyl)silan

100 g einer Fraktion aus Nebenprodukten der Polyisobutensynthese, worin mindestens 95 Gew.-% Verbindungen mit 12 C-Atomen enthalten waren, wurden mit 0,1 ml einer Lösung eines Divinylsiloxan-Platin-O-Komplexes in Xylol (3 bis 3,5 % Pt) versetzt und auf 120 °C erwärmt. Zu dem erwärmten Olefin wurde Trichlorsilan (insgesamt 80 g, 0,59 mol) zudosiert und die Temperatur 7 h auf 120 °C gehalten. Anschließend wurde im Vakuum destilliert.
Ausbeute: 97 g
²⁹Si-NMR-Daten, δ = 11,8 ppm
Kp = 106 °C/0,3 mbar
Chlorgehalt: 35,17 % (ber. 35,01)
Elementaranalytik: C 47,4 % (ber. 47,44), H 8,4 % (ber. 8,30).

### Beispiel 8

### Herstellung von Trimethoxy(2,4,4,6,6,8,8,10,10-nonamethylundecyl)silan

Zu 108 g 30%ige Natriummethylatlösung in Methanol und 300 ml THF wurden 83,2 g (0,2 mol) Trichlor(2,4,4,6,6,8,8,10,10-nonamethylundecyl)silan gegeben, wobei eine stark exotherme Reaktion eintrat. Nach der Beendigung des Zutropfens wurde 30 min gerührt und das ausgefallene Natriumchlorid abgetrennt. THF und Methanol wurden abdestilliert und das Produkt durch Destillation gereinigt.
Ausbeute: 66 g, 82 %
NMR-Daten
¹³C-NMR, δ (ppm) = 21,2, 24,9 (1C), 25,9 (1C), 29,7, 29,9, 31,1, 31,3, 31,5 (6C), 32,8 (3C), 32,9, 36,5, 38,1, 38,2 (4C), 50,7 (3C), 57,2, 57,3, 58,6, 59,0 (4C)
²⁹Si-NMR, δ (ppm) = -42,1
Kp = 125 bis 130 °C/0,01 mbar
Elementaranalytik: C 68,2 % (ber. 68,55), H 12,1 % (ber. 12,51)

### Beispiel 9

### Herstellung von Dichlor(2,4,4,6,6,-pentamethylheptyl)iso-propylsilan

137,8 g Trichlor(2,4,4,6,6-pentamethylheptyl)silan, hergestellt gemäß Beispiel 7, wurden in Toluol gelöst, und unter Argon auf 100 °C erwärmt. Zu dieser Lösung wurden über einen Tropftrichter 220 ml Isopropylmagnesiumchlorid als 2-molare Lösung in THF innerhalb von 1 h zugetropft. Anschließend wurde das THF über eine Kolonne abdestilliert und das Reaktionsgemisch 20 h bei 100 °C gerührt. Zur Abtrennung des ausgefallenen Feststoffes wurde filtriert und das Produkt mittels Vakuumdestillation isoliert.
Ausbeute: 59,3 g, 42 %
Kp = 80 °C/0,015 mbar
²⁹Si-NMR-Daten, δ (ppm) = 34,7

### Beispiel 10

### Herstellung von Dimethoxy(2,4,4,6,6-pentamethylheptyl)iso-propylsilan

64,8 g Dichlor(2,4,4,6,6-pentamethylheptyl)iso-propylsilan, hergestellt gemäß Beispiel 9, wurden in 250 ml wasserfreiem THF unter Argon gelöst. Dazu wurden innerhalb von 30 min 77 g Natriummethylat (30,1 % in Methanol) unter starkem Rühren zugetropft und das Reaktionsgemisch 2 h bei Raumtemperatur gerührt. Nach Abtrennung des ausgefallenen Natriumchlorids und Entfernung des Lösungsmittels am Rotationsverdampfer wurde im Vakuum über eine Vigreux-Kolonne destilliert.
Ausbeute: 54,6 g, 89 %
Kp = 83 °C/0,015 mbar
Reinheit (GC) = 99,5 Fl-%
Elementaranalytik: C 67,2 % (ber. 67,48), H 12,3 % (ber. 12,66), Si 9,1 % (ber. 9,28)
¹³C-NMR-Daten, δ (ppm) = 12,7 (1C), 17,0 (2C), 22,1 (1C), 24,6 (1C), 25,7 (1C), 29,0 (1C), 29,2 (1C), 32,2 (3C), 32,4 (1C), 35,9 (1C), 50,5 (2C), 55,7 (1C), 56,6 (1C)
²⁹Si-NMR-Daten, δ (ppm) = -5,2

## Patentansprüche

1. Silane der allgemeinen Formel I 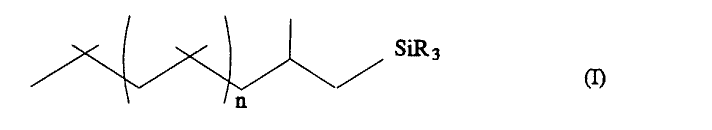 in der n eine ganze Zahl von 1 bis 5 ist, mindestens einer der Reste R für einen hydrolysierbaren Rest aus der Gruppe der Substituenten Halogen, Alkoxy, sek. Amino und Oxycarbonylwasserstoff oder Oxycarbonylalkyl steht und die anderen Reste für Alkyl, Cycloalkyl, Aryl oder einen der genannten hydrolysierbaren Reste stehen.

2. Silane nach Anspruch 1, in denen mindestens einer der Reste R für Chlor oder C₁-C₄-Alkoxy steht.

3. Silane nach Anspruch 1 oder 2, in denen die Gruppe SiR₃ für einen Rest aus der Gruppe der Reste Trichlorsilyl, Chlordimethoxysilyl, Dichlormethoxysilyl, Trimethoxysilyl, Dimethoxymethylsilyl, Dimethoxyiso-propylsilyl, Diethoxymethylsilyl, Triethoxysilyl, Chlordimethylsilyl und Dichlormethylsilyl steht.

4. Silane nach einem der Ansprüche 1 bis 3, in denen n für 1, 2 oder 3 steht.

5. Trichlor(2,4,4,6,6-pentamethylheptyl)silan,
Dichlormethyl(2,4,4,6,6-pentamethylheptyl)silan,
Dimethoxymethyl(2,4,4,6,6-pentamethylheptyl)silan,
Dimethoxy(2,4,4,6,6-pentamethylheptyl)iso-propylsilan,
Chlordimethyl(2,4,4,6,6-pentamethylheptyl)silan,
tert.-Butyldimethoxy(2,4,4,6,6-pentamethylheptyl)silan,
Dimethoxy(2,4,4,6,6-pentamethylheptyl)cyclopentylsilan,
Trichlor(2,4,4,6,6,8,8-heptamethylnonyl)silan,
Chlor(2,4,4,6,6,8,8-heptamethylnonyl)dimethoxysilan,
Dichlor(2,4,4,6,6,8,8-heptamethylnonyl)methoxysilan,
(2,4,4,6,6,8,8-Heptamethylnonyl)trimethoxysilan,
Dichlor(2,4,4,6,6,8,8-heptamethylnonyl)methylsilan,
Trichlor(2,4,4,6,6,8,8,10,10-nonamethylundecyl)silan, oder
Trimethoxy(2,4,4,6,6,8,8,10,10-nonamethylundecyl)silan.

6. Verfahren zur Herstellung von Silanen der Formel I gemäß Anspruch 1, dadurch gekennzeichnet, daß man ein iso-Butenoligomer der allgemeinen Formel II 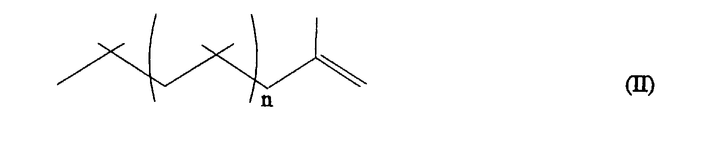 in der n eine ganze Zahl von 1 bis 5 ist,
in Gegenwart eines Hydrosilylierungskatalysators mit einem eine SiH-Gruppe tragenden Silan, das als weitere Substituenten Chlor, Brom, Alkyl oder Aryl trägt, unter Addition an die Doppelbindung umsetzt, und gegebenenfalls die Chlor- und Bromreste durch weitere
- Umsetzung mit Fluorwasserstoff oder Antimontrifluorid durch Fluor substituiert,
- Umsetzung mit Alkoholen, Trialkylorthoformiaten oder Alkalimetallalkoholaten durch Alkoxygruppen substituiert,
- Umsetzung mit Carbonsäuren oder Carbonsäureanhydriden durch Oxycarbonylgruppen substituiert,
- Umsetzung mit sekundären Aminen oder den entsprechenden Alkalimetallamiden durch sek. Aminogruppen substituiert, oder
- durch Umsetzung mit Alkyl- oder Cycloalkylmagnesiumhalogeniden oder mit Lithium- oder Natrium-Alkanen oder Lithium- oder Natrium-Cycloalkanen durch Alkyl- oder Cycloalkylgruppen substituiert.

7. Verfahren nach Anspruch 6, dadurch gekennzeichnet, daß man ein iso-Butenoligomer der Formel II gemäß Anspruch 6 mit Trichlorsilan, Methyldichlorsilan oder Dimethylchlorsilan umsetzt.

8. Verwendung von Silanen der Formel Ia 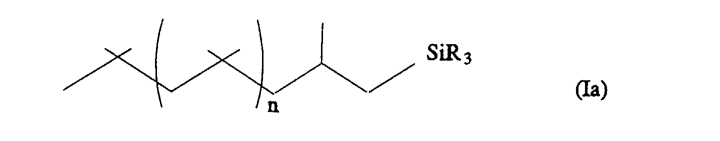 in der n eine ganze Zahl von 0 bis 5 ist, und die Reste R wie in Anspruch 1 definiert sind,
zur Hydrophobierung poröser mineralischer Substrate, zur Herstellung von chromatographischen Phasen, zur Beschichtung anorganischer Pigmente, zur Erzeugung von Isolatorfilmen auf elektronischen Bauteilen auf Siliciumbasis, zur Beschichtung von Gläsern, oder als Stereomodifier bei der Polymerisation von α-Olefinen.

## Claims

1. A silane of the general formula I 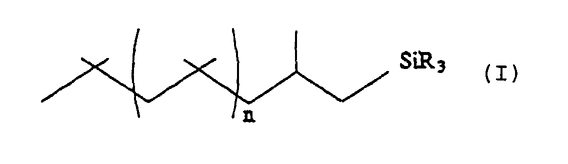 in which n is an integer from 1 to 5, at least one of the radicals R is a hydrolyzable radical from the group of substituents consisting of halogen, alkoxy, secondary amino and oxycarbonylhydrogen, or is oxycarbonylalkyl, and the other radicals are alkyl, cycloalkyl, aryl or one of the said hydrolyzable radicals.

2. A silane according to claim 1, in which at least one of the radicals R is chlorine or C₁-C₄-alkoxy.

3. A silane according to claim 1 or 2, in which the group SiR₃ is a radical from the group of radicals consisting of trichlorosilyl, chlorodimethoxysilyl, dichloromethoxysilyl, trimethoxysilyl, dimethoxymethylsilyl, dimethoxyisopropylsilyl, diethoxymethylsilyl, triethoxysilyl, chlorodimethylsilyl and dichloromethylsilyl.

4. A silane according to one of claims 1 to 3, in which n is 1, 2 or 3.

5. Trichloro(2,4,4,6,6-pentamethylheptyl)silane,
dichloromethyl(2,4,4,6,6-pentamethylheptyl)silane,
dimethoxymethyl (2,4,4,6,6-pentamethylheptyl)silane,
dimethoxy (2,4,4,6,6-pentamethylheptyl)isopropylsilane,
chlorodimethyl(2,4,4,6,6-pentamethylheptyl)silane,
tert-butyldimethoxy(2,4,4,6,6-pentamethylheptyl)silane,
dimethoxy(2,4,4,6,6-pentamethylheptyl)cyclopentylsilane,
trichloro(2,4,4,6,6,8,8-heptamethylnonyl)silane, chloro(2,4,4,6,6,8,8-heptamethylnonyl)dimethoxysilane,
dichloro(2,4,4,6,6,8,8-heptamethylnonyl)methoxysilane,
(2,4,4,6,6,8,8-heptamethylnonyl)trimethoxysilane,
dichloro(2,4,4,6,6,8,8-heptamethylnonyl)methylsilane,
trichloro(2,4,4,6,6,8,8,10,10-nonamethylundecyl)silane or
trimethoxy(2,4,4,6,6,8,8,10,10-nonamethylundecyl)silane.

6. A process for preparing silanes of the formula I according to claim 1, wherein an isobutene oligomer of the general formula II 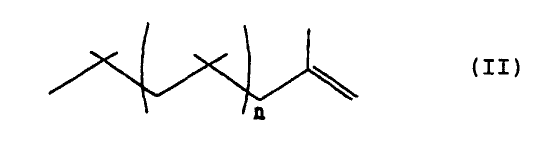 in which n is an integer from 1 to 5;
is reacted with a silane which carries an SiH group and, as further substituents, chlorine, bromine, alkyl or aryl with addition to the double bond in the presence of a hydrosilylation catalyst and, if desired, the chlorine and bromine radicals are
- substituted by fluorine, by further reaction with hydrogen fluoride or antimony trifluoride;
- substituted by alkoxy groups, by further reaction with alcohols, trialkyl orthoformates or alkali metal alcoholates;
- substituted by oxycarbonyl groups, by further reaction with carboxylic acids or carboxylic anhydrides;
- substituted by secondary amino groups, by further reaction with secondary amines or with the corresponding alkali metal amides; or
- substituted by alkyl or cycloalkyl groups, by further reaction with alkyl- or cycloalkyl-magnesium halides or with lithium- or sodium-alkanes or lithium- or sodium-cycloalkanes.

7. A process according to claim 6, wherein an isobutene oligomer of formula II according to claim 6 is reacted with trichlorosilane, methyldichlorosilane or dimethylchlorosilane.

8. The use of a silane of the formula Ia 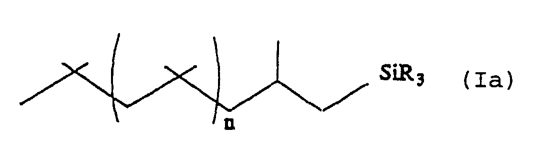 in which n is an integer from 0. to 5 and the radicals R are as defined in claim 1,
to hydrophobicize porous mineral substrates, to prepare chromatographic phases, to coat inorganic pigments, to generate insulator films on silicon-based electronic components, to coat glasses, or as a stereomodifier in the polymerization of α-olefins.

## Revendications

1. Silanes de la formule générale I : 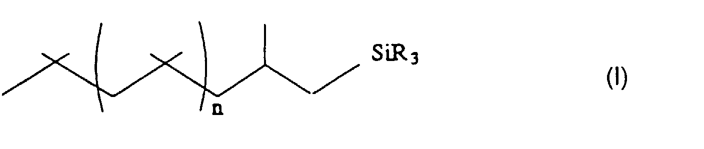 dans laquelle n représente un nombre entier de 1 à 5, au moins un des radicaux R représente un radical hydrolysable du groupe des substituants halogène, alcoxy, amino secondaire et oxycarbonylhydrogène ou oxycarbonylalkyle, et les autres radicaux représentent des radicaux alkyle, cycloalkyle, aryle ou un des radicaux hydrolysables cités.

2. Silanes suivant la revendication 1, dans lesquels au moins un des radicaux R représente du chlore ou un alcoxy en C₁-C₄.

3. Silanes suivant l'une des revendications 1 et 2, dans lesquels le groupe SiR₃ représente un radical choisi parmi le groupe des radicaux trichlorosilyle, chlorodiméthoxysilyle, dichlorométhoxysilyle, triméthoxysilyle, diméthoxyméthylsilyle, diméthoxyiso-propylsilyle, diéthoxyméthylsilyle, triéthoxysilyle, chlorodiméthylsilyle et dichlorométhylsilyle.

4. Silanes suivant l'une des revendications 1 à 3, dans lesquels n a une valeur de 1, 2 ou 3.

5. Trichloro-(2,4,4,6,6-pentaméthylheptyl)silane,
dichlorométhyl-(2,4,4,6,6-pentaméthylheptyl)silane,
diméthoxyméthyl-(2,4,4,6,6-pentaméthylheptyl)silane,
diméthoxy-(2,4,4,6,6-pentaméthylheptyl)iso-propylsilane,
chlorodiméthyl-(2,4,4,6,6-pentaméthylheptyl)silane,
tert-butyldiméthoxy-(2 ,4,4,6,6-pentaméthylheptyl)silane,
diméthoxy-(2,4,4,6,6-pentaméthylheptyl)cyclopentylsilane,
trichloro-(2,4,4,6,6,8,8-heptaméthylnonyl)silane,
chloro-(2,4,4,6,6,8,8-heptaméthylnonyl)diméthoxysilane,
dichloro-(2,4,4,6,6,8,8-heptaméthylnonyl)méthoxysilane,
(2,4,4,6,6,8,8-heptaméthylnonyl)triméthoxysilane,
dichloro-(2,4,4,6,6,8,8-heptaméthylnonyl)méthylsilane,
trichloro-(2,4,4,6,6,8,8,10,10-nonaméthylundécyl)silane, ou
triméthoxy-(2,4,4,6,6,8,8,10,10-nonaméthylundécyl)silane.

6. Procédé de préparation de silanes de la formule I suivant la revendication 1, caractérisé en qu'on fait réagir un oligomére d'isobutène de la formule générale II : 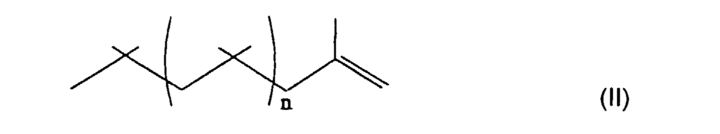 dans laquelle n est un nombre entier de 1 à 5,
en présence d'un catalyseur d'hydrosilylation, avec un silane qui porte un groupe SiH et, comme autres substituants, du chlore, du brome, un groupe alkyle ou aryle, avec addition sur la double liaison, et en ce qu'éventuellement on substitue les radicaux chlore et brome
- par du fluor par une autre réaction avec de l'acide fluorhydrique ou du trifluorure d'antimoine,
- par des groupes alcoxy par une autre réaction avec des alcools, des orthoformiates de trialkyle ou des alcoolates de métal alcalin,
- par des groupes oxycarbonyle par une autre réaction avec des acides carboxyliques ou des anhydrides carboxyliques,
- par des groupes amino secondaire par une autre réaction avec des amines secondaires ou les amidures de métal alcalin correspondants, ou
- par des groupes alkyle ou cycloalkyle par une réaction avec des halogénures d'alkyl- ou cycloalkyl-magnésium ou avec des lithium-alcanes ou sodium-alcanes ou des lithium-cycloalcanes ou sodium-cycloalcanes.

7. Procédé suivant la revendication 6, caractérisé en ce qu'on fait réagir un oligomère d'isobutène de la formule II suivant la revendication 6 avec du trichlorosilane, du méthyldichlorosilane ou du diméthylchlorosilane.

8. Utilisation de silanes de la formule Ia : 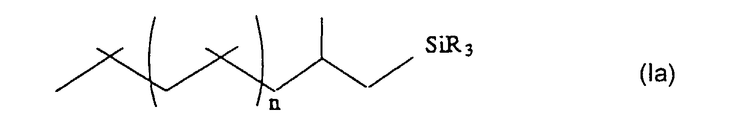 dans laquelle n représente un nombre entier de 0 à 5 et les radicaux R sont définis comme dans la revendication 1,
pour rendre hydrophobes des substrats minéraux poreux, pour la préparation de phases chromatographiques, pour l'enduction de pigments inorganiques, pour la production de films isolants sur des pièces de construction électroniques à base de silicium, pour le recouvrement de verres, ou comme stéréomodificateurs lors de la polymérisation d'α-oléfines.
